## Europäisches Patentamt
## European Patent Office
## Office européen des brevets

(11) Publication number: **0 059 759**
**B1**

# EUROPEAN PATENT SPECIFICATION

(45) Date of publication of patent specification: **06.12.89**

(51) Int. Cl.⁴: **B 23 Q 35/12, B 23 Q 35/48, G 01 B 21/20, G 01 B 7/28**

(21) Application number: **81902457.1**

(22) Date of filing: **04.09.81**

(86) International application number:
**PCT/JP81/00220**

(87) International publication number:
**WO 82/00966 01.04.82 Gazette 82/09**

(54) **COPYING CONTROL SYSTEM.**

(30) Priority: **12.09.80 JP 126780/80**

(43) Date of publication of application:
**15.09.82 Bulletin 82/37**

(45) Publication of the grant of the patent:
**06.12.89 Bulletin 89/49**

(84) Designated Contracting States:
**DE FR GB**

(56) References cited:
**JP-B-4 536 707**
**JP-B-5 345 950**
**SE-A-7 810 806**
**US-A-3 609 322**
**US-A-3 976 928**
**US-A-4 044 289**

(73) Proprietor: **FANUC LTD**
**3580, Shibokusa Aza-Komanba Oshino-mura**
**Minamitsuru-gun Yamanashi 401-05 (JP)**

(72) Inventor: **IMAZEKI, Ryoji**
**987-44, Naganuma-cho Hachioji-shi**
**Tokyo 192 (JP)**
Inventor: **YAMAZAKI, Etsuo**
**566-93, Shimoongata-cho Hachioji-shi**
**Tokyo 192-01 (JP)**

(74) Representative: **Billington, Lawrence Emlyn et al**
**Haseltine Lake & Co. 9 Park Square**
**Leeds LS1 2LH (GB)**

The file contains technical information submitted after the application was filed and not included in this specification

Courier Press, Leamington Spa, England.

## EP 0 059 759 B1

**Description**

The present invention relates to a tracer control system of the type wherein a tracer head traces the surface of a model, and a tool such as a cutter follows the motion of the tracer head so as to reproduce the shape of the model in a workpiece.

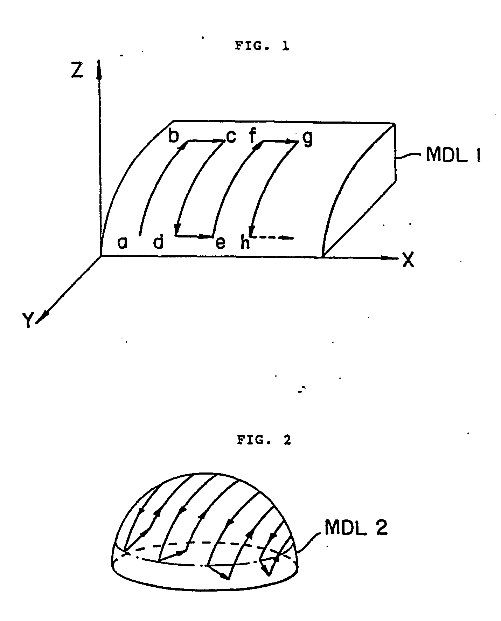

In the case of tracing a model MDL 1 of a three-dimensional configuration such, for example, as shown in Figure 1, by a system which performs tracer control through calculating a trace velocity and a trace direction based on signals available from a tracer head tracing the model surface, the tracing usually takes place following a route a-b-c-d-e- . . . . . . That is, the tracer head moves from the position a to the trace return position b in the Y-Z plane, a pick feed is carried out to turn the tracer head to the X-axis direction at the trace return position b, thence the tracer head moves to the position c in the X-Z plane, and thence moves from the position c to the trace return position d in the Y-Z plane again. In this way, the feed axis is turned through 90° between the pick feed and the tracing operation.

In the case of tracing the model MDL 1 shown in Figure 1, as described above, the pick feed can be effected in a single plane simply by turning the feed axis through 90°. In the case of tracing a hemispherical model MDL 2 such, for instance, as shown in Figure 2, if the abovesaid system is applied, the pick feed cannot be effected in a single plane, as illustrated; solution of this problem is now being demanded.

DE—A—2 847 027 discloses tracer apparatus having a tracer head for tracing the surface of a model and a tool for machining a workpiece to produce a copy of the model. The apparatus includes a memory for storing tracing stroke limit data and other data, and an input unit for feeding such data into the memory. Data for a tracing operating is input via the input unit, stored in the memory, and read out as the tracing operation proceeds. The input data includes data on tracing direction and speed, pick feed direction, speed and value, and tracing stroke limits. The need for mechanically-activated limit switches is hence removed and the tracing path can be altered simply by feeding new data to the memory.

In the system of DE—A—2 847 027, tracing is carried out in one direction (Y) and may be positive or negative, and pick feed is carried out in a single perpendicular direction (X) and is always positive. Reversible counters keep track of the progress of the tracing and pick feed. During tracing, when one counter indicates that the tracing stroke limit has been reached, tracing stops and a processor of the apparatus reads the pick feed direction, speed, and value from the memory. Pick feed is then carried out until another counter indicates that the pick feed value has been reached. This system is unsuitable for complex tracing such as tracing a hemispherical model, when it is desired to effect all pick feeds in the same plane.

According to the present invention, there is provided a tracer control system for machining apparatus of the type in which a tracer head traces the surface of a model and a tool follows the motion of the tracer head so as to machine a workpiece in the shape of the model, wherein the tracer head is operable to trace the model surface in at least a first plane, to carry out a pick feed in at least a second plane when a boundary of a trace region is reached, and to resume tracing after completion of the pick feed; and is operable to generate displacement signals $\varepsilon_x$, $\varepsilon_y$ and $\varepsilon_z$ representing displacements of the tracer head along X, Y and Z axes of a Cartesian co-ordinate system; the tracer control system comprising:

monitoring means arranged to determine the trace direction and velocity on the basis of said displacement signals, and to compare said displacement signals with a predetermined displacement amount for producing an error amount;

calculating means arranged to calculate control signals for the tracer head on the basis of at least said error amount;

an input unit for inputting data on a desired pick feed direction; and

means for producing a feed-direction signal for supply to said calculating means based at least on said input data;

characterised by:

a phase decision circuit operable to decide the polarity of one of said displacement signals in the direction of one of said axes; and by

a sequence controller, operable to control said tracing and pick feed on the basis of a pick feed value and trace return position information from said input unit, providing said means for producing a feed-direction signal and operable to produce that signal based on the result of the decision by the phase decision circuit and said inputted data on the pick feed direction, and further operable to control said monitoring means in such a way as to suppress one of said displacement signals outside said second plane during said pick feed, whereby it is ensured that said control signals supplied to the tracer head are restricted to control signals for displacement in said second plane.

The present invention addresses such a demand as mentioned above, and embodiments of the invention may enable pick feeding in a single plane in the case of tracing a hemispherical model.

In embodiments of the present invention, the direction of pick feed is determined by a trace-direction signal produced on the basis of the result of a decision by a phase decision circuit and the direction of pick feed available from an input unit, and pick feeding is performed by a contour trace. Even in the case of tracing a hemispherical model, the pick feed can be effected in the X-Y plane.

Reference is made, by way of example, to the accompanying drawings in which:

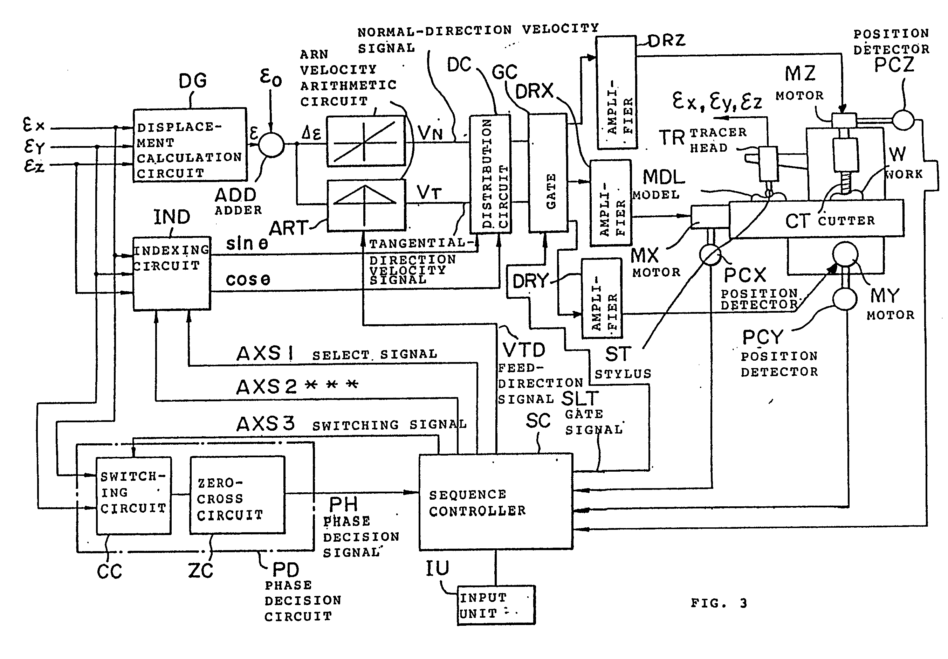

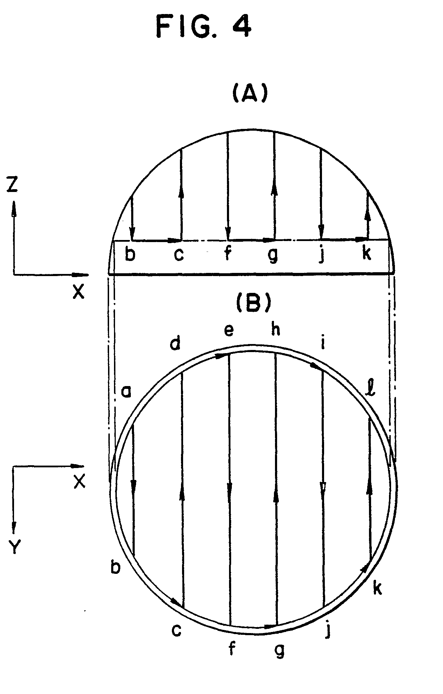

Figures 1 and 2 are explanatory of a prior art example; Figure 3 is a block diagram illustrating an

2

embodiment of the present invention; and Figures 4(A) and (B) are explanatory of the operation of the embodiment shown in Figure 3.

For a more detailed description of the present invention, an embodiment will hereinafter be described in detail.

Figure 3 is a block diagram illustrating an embodiment of the present invention. Reference character DG indicates a displacement calculation circuit, IND an indexing circuit, ARN and ART velocity arithmetic circuits, DC a distribution circuit, GC a gate circuit, PD a phase decision circuit composed of a switching circuit CC and a zero-cross circuit ZC, SC a sequence controller, IU an input unit, DRX, DRY and DRZ amplifiers, MX, MY and MZ motors, PCX, PCY and PCZ position detectors, ADD an adder, MDL a model, W a work, TR a tracer head, CT a cutter, and ST a stylus.

Figures 4(A) and (B) show routes in the case of tracing a hemispherical model according to this embodiment, Figure 4(A) being a front view and (B) a top plan view. As will be seen from Figures 4(A) and (B), according to this embodiment, the tracer head moves from the position a to the trace return position b in the Y-Z plane, the pick feed takes place at the trace return position b, thence the tracer head moves to the position c in the X-Y plane, and thence moves from the position c to the trace return position d in the Y-Z plane again, whereafter the pick feed is effected in the same plane (i.e. a single plane (X, Y)).

Based on displacement signals $\varepsilon_X$, $\varepsilon_Y$ and $\varepsilon_Z$ from the tracer head TR, the displacement calculation circuit DG yields a composite displacement signal

$$\varepsilon = \sqrt{\varepsilon_X^2 + \varepsilon_Y^2 + \varepsilon_Z^2},$$

which is applied to the adder ADD. The adder ADD obtains a difference $\Delta\varepsilon$ between the composite displacement signal $\varepsilon$ and a reference displacement signal $\varepsilon_0$, which difference is provided to the velocity arithmetic circuits ARN and ART. The velocity arithmetic circuit ARN produces a normal-direction velocity signal $V_N$ based on the difference $\Delta\varepsilon$, whereas the velocity arithmetic circuit ART produces a tangential-direction velocity signal $V_T$ based on the difference $\Delta\varepsilon$ and a feed-direction signal VTD fed from the sequence controller SC. The feed-direction signal VTD indicates whether the direction of tangential velocity is $+90°$ or $-90°$ with respect to the normal direction. Accordingly, the tangential-direction velocity signal $V_T$ assumes opposite polarities in the cases of the feed-direction signal VTD being "1" and "0".

The indexing circuit IND obtains displacement-direction signals $\sin\theta$ and $\cos\theta$ in a trace plane, based on displacement signals of two axial directions selected by select signals AXS1 and AXS2 fed from the sequence controller SC. Now, assuming that the tracing takes place along the routes shown in Figures 4(A) and (B), the sequence controller SC causes the select signal AXS2 to select the displacement signal $\varepsilon_Z$ during tracing between the positions a and b, between the positions c and d, between the positions e and f, between the positions g and h, between the positions i and j and between the positions k and l and to select the displacement signal $\varepsilon_X$ between the positions b and c, between the positions d and e, between the positions f and g, between the positions h and i and between the positions j and k, and causes the select signal AXS1 to select the displacement signal $\varepsilon_Y$ between the positions a and l.

The switching circuit CC in the phase decision circuit PD selects either one of the displacement signals $\varepsilon_X$ and $\varepsilon_Y$, based on a switching signal AXS3, and applies the selected signal to the zero-cross circuit ZC. When the displacement signal $\varepsilon_X$ is being selected by the switching signal AXS3, the displacement signal $\varepsilon_X$ is provided to the zero-cross circuit ZC, whereas when the displacement signal $\varepsilon_Y$ is being selected by the switching signal AXS3, the displacement signal $\varepsilon_Y$ is applied to the zero-cross circuit ZC. The zero-cross circuit ZC yields a phase decision signal PH indicating the polarity of the displacement signal $\varepsilon_X$ or $\varepsilon_Y$ applied via the switching circuit CC, and the phase decision signal is supplied to the sequence controller SC. Accordingly, when performing tracing along the routes shown in Figures 4(A) and (B), the phase decision circuit PD derives the phase decision signal PH indicative of the polarity of the displacement signal $\varepsilon_Y$.

The sequence controller SC determines the feed-direction signal VTD as shown in Table 1, based on the phase decision signal PH from the phase decision circuit PD and a signal indicative of the direction of pick feed which has been input via the input unit IU, and the feed-direction signal is supplied to the velocity arithmetic circuit ART.

TABLE 1

| Direction of pick feed | Phase decision signal PH | Feed-direction signal VTD |
|:---:|:---:|:---:|
| + | − | "1" |
| − | + | "1" |
| + | + | "0" |
| − | − | "0" |

Furthermore, the sequence controller SC produces and outputs the select signals AXS1 and AXS2, the switching signals AXS3 and a gate signal SLT for controlling the gate circuit GC, based on a pick feed value and trace return position information from the input unit IU and the position signals from the position detectors PCX, PCY and PCZ. For instance, in the case of tracing along the routes shown in Figures 4(A) and (B), the sequence controller SC provides, during tracing between the positions a and b, between the positions c and d, between the positions e and f, between the positions g and h, between the positions i and j and between the positions k and l, the select signal AXS1 for selecting the displacement signal $\varepsilon_Y$, the select signal AXS2 for selecting (in this case) the displacement signal $\varepsilon_Z$ from $\varepsilon_X$ and $\varepsilon_Z$ and the gate signal SLT for controlling the gate circuit GC so that a velocity command signal, which is produced in the distribution circuit DC based on the displacement-direction signals sin θ and cos θ, the normal-direction velocity signal $V_N$ and the tangential-direction velocity signal $V_T$, may be applied to the amplifiers DRY and DRZ. Moreover, the sequence controller yields, during tracing between the positions b and c, between the positions d and e, between the positions f and g, between the positions h and i and between the positions j and k, the select signal AXS1 for selecting the displacement signal $\varepsilon_Y$, the select signal AXS2 for selecting (in this case) the displacement signal $\varepsilon_X$ from $\varepsilon_Z$ and $\varepsilon_X$, and the gate signal SLT for controlling the gate circuit GC so that the velocity command signal from the distribution circuit DC may be provided to the amplifiers DRX and DRY.

Besides, in this case, the phase decision signal PH from the phase decision circuit PD varies as shown in Table 2.

TABLE 2

| Section | Phase decision signal |
|---|---|
| a-b | + |
| b-c-d | − |
| d-e-f | + |
| f-g-h | − |
| h-i-j | + |
| j-k-l | − |

Further, in this case, since the direction of pick feed is +, the feed-direction signal VTD becomes such as shown in Table 3 as will be seen from Tables 1 and 2.

TABLE 3

| Section | Feed-direction signal VTD |
|---|---|
| a-b | "0" |
| b-c-d | "1" |
| d-e-f | "0" |
| f-g-h | "1" |
| h-i-j | "0" |
| j-k-l | "1" |

Since the feed-direction signal VTD represents whether the direction of tangential velocity is selected to be +90° or −90° with respect to the normal direction as referred to previously, and since the polarity of the tangential-direction velocity signal $V_T$ from the velocity arithmetic circuit ART is opposite in the case that the feed-direction signal VTD is "0" or "1", respectively, tracing can be carried out along the route shown in Figures 4(A) and (B), by driving the motors MX, MY and MZ with the outputs of the amplifiers DRX, DRY and DRZ selected by the gate circuit GC. Accordingly, in the case of tracing a hemispherical model, the pick feed plane corresponds to the contour trace and can be held in the X-Y plane.

4

As has been described in the foregoing, according to the present invention, the direction of pick feed is determined by a feed-direction signal produced based on the result of decision by a phase decision circuit and the direction of pick feed supplied from an input unit, and the pick feed is performed by contour trace. Therefore, the present invention possesses the advantage that even in the case of tracing a hemispherical model, the pick feed plane can be held in the X-Y plane.

## Claims

1. A tracer control system for machining apparatus of the type in which a tracer head (TR) traces the surface of a model (MDL) and a tool (CT) follows the motion of the tracer head (TR) so as to machine a workpiece (W) in the shape of the model (MDL), wherein the tracer head (TR) is operable to trace the model (MDL) surface in a first plane (e.g. Y, Z), to carry out a pick feed in a second plane (e.g. X, Y) when a boundary of a trace region is reached, and to resume tracing after completion of the pick feed; and is operable to generate displacement signals $\varepsilon_x$, $\varepsilon_y$ and $\varepsilon_z$ representing displacements of the tracer head along X, Y and Z axes of a Cartesian co-ordinate system; the tracer control system comprising:

monitoring means (DG, ADD, IND) arranged to determine the trace direction and velocity on the basis of said displacement signals $\varepsilon_x$, $\varepsilon_y$, $\varepsilon_z$, and to compare said displacement signals with a predetermined displacement amount $\varepsilon_0$ for producing an error amount $\Delta\varepsilon$;

calculating means (ARN, ART) arranged to calculate control signals ($V_N$, $V_T$) for the tracer head on the basis of at least said error amount $\Delta\varepsilon$;

an input unit (IU) for inputting data on a desired pick feed direction; and

means (SC) for producing a feed-direction signal (VTD) for supply to said calculating means based at least on said input data; characterised by:

a phase decision circuit (PD) operable to decide the polarity of one of said displacement signals (e.g., $\varepsilon x$) in the direction of one of said axes (e.g. X); and by

a sequence controller (SC), operable to control said tracing and pick feed on the basis of a pick feed value and trace return position information from said input unit (IU), providing said means for producing a feed-direction signal (VTD) and operable to produce that signal based on the result of the decision by the phase decision circuit (PD) and said inputted data on the pick feed direction, and further operable to control said monitoring means in such a way as to suppress one of said displacement signals (e.g., $\varepsilon z$) outside said second plane (e.g. X, Y) during said pick feed, whereby it is ensured that said control signals supplied to the tracer head are restricted to control signals for displacement in said second plane (e.g. X, Y).

2. A tracer control system as claimed in claim 1, wherein said monitoring means (DG, ADD, IND) comprise a displacement calculation circuit (DG) operable to convert said displacement signals $\varepsilon_x$, $\varepsilon_y$, $\varepsilon_z$ into a composite displacement signal $\varepsilon$ in accordance with the formula:

$$\varepsilon=\sqrt{\varepsilon_x{}^2+\varepsilon_y{}^2+\varepsilon_z{}^2}.$$

3. A tracer control system as claimed in claim 2, wherein said calculating means comprise a normal-direction velocity arithmetic circuit (ARN) and a tangential-direction velocity arithmetic circuit (ART) each connected to receive the composite displacement signal $\varepsilon$ from the displacement calculation circuit (DG) and operable to generate each normal-direction velocity signal ($V_N$) and a tangential-direction velocity signal ($V_T$), respectively.

4. A tracer control system as claimed in claim 3, wherein said tangential-direction velocity arithmetic circuit (ART) is also connected to receive said feed-direction signal (VTD) from said sequence controller (SC) and is operable to determine the polarity of the tangential-direction velocity signal ($V_T$) accordingly.

5. A tracer control system as claimed in any preceding claim, wherein said phase decision circuit (PD) comprises a switching circuit (CC), for selecting one of the displacement signals $\varepsilon_x$ and $\varepsilon_y$, and a zero-cross circuit (ZC) for receiving the selected one of the displacement signals $\varepsilon_x$ or $\varepsilon_y$ and for generating the phase decision signal (PH) indicating the polarity of that displacement signal.

## Patentansprüche

1. Abtastersteuersystem für eine Bearbeitungsvorrichtung der Art, bei der ein Abtastkopf (TR) die Oberfläche eines Modells (MDL) abtastet und ein Werkzeug (CT) der Bewegung des Abtastkopfes (TR) folgt, um so einem Werkstück (W) durch Bearbeiten die Form des Modells (MDL) zu geben, wobei der Abtastkopf (TR) betreibbar ist, um die Oberfläche des Modells (MDL) in einer ersten Ebene (z.B. Y, Z) abzutasten, eine Abtastvorschubbewegung in einer zweiten Ebene (z.B. X, Y) auszuführen, wenn eine Grenze eines Abtastbereichs erreicht ist, und das Abtasten nach dem Beenden der Abtastvorschubbewegung wieder aufzunehmen, und betreibbar ist, um Abweichungssignale $\varepsilon_x$, $\varepsilon_y$ u. $\varepsilon_z$ zu erzeugen, die Abweichungen des Abtastkopfes längs X-, Y- u. Z-Achsen eines kartesischen Koordinatensystems repräsentieren, welches Kopiersteuersystem enthält:

—Überwachungsmittel (DG, ADD, IND), die vorgesehen sind, um die Abtastrichtung und die Geschwindigkeit auf der Grundlage der Abweichungssignale $\varepsilon_x$, $\varepsilon_y$ u. $\varepsilon_z$ zu bestimmen und um die Abweichungssignale mit einem vorbestimmten Abweichungsbetrag $\varepsilon_o$ zum Erzeugen eines Fehlerbetrags $\Delta\varepsilon$ zu vergleichen,

—Berechnungsmittel (ARN, ART), die vorgesehen sind, um Steuersignale ($V_N$, $V_T$) für den Abtastkopf auf der Grundlage zumindest des Fehlerbetrags $\Delta\varepsilon$ zu berechnen,

—eine Eingabeeinheit (IU) zum Eingeben von Daten betreffend eine gewünschte Abtastvorschubbewegungsrichtung und

—ein Mittel (SC) zum Erzeugen eines Abtastvorschubbewegungsrichtungssignals (VTD) und zum Liefern desselben an die Berechnungsmittel auf der Grundlage zumindest der eingegebenen Daten, gekennzeichnet, durch

—eine Phasenentscheidungsschaltung (PD), die betreibbar ist, um die Polarität eines der Abweichungssignale (z.B. $\varepsilon_x$) in der Richtung einer der Achsen (z.B. X) festzustellen, und durch

—eine Sequenzsteuereinrichtung (SC), die betreibbar ist, um das Abtasten und die Abtastvorschubbewegung auf der Grundlage eines Abtastvorschubbewegungswerts und von Abtastrückkehrpositionsinformation aus der Eingabeeinheit (IU) zu steuern, wozu ein Abtastvorschubbewegungsrichtungssignal (VTD) zu erzeugen ist, und betreibbar ist, um dieses Signal auf der Grundlage des Ergebnisses der Entscheidung durch die Phasenentscheidungsschaltung (PD) und der eingegebenen Daten betreffend die Abtastvorschubbewegungsrichtung zu erzeugen, und ferner betreibbar ist, um die Überwachungsmittel in einer Weise zu steuern, daß eines der Abweichungssignale (z.B. $\varepsilon_z$) außerhalb der zweiten Ebene (z.B. X, Y) während der Abtastvorschubbewegung unterdrückt wird, wodurch sichergestellt ist, daß die Steuersignale, die dem Abtastkopf zugeführt werden, auf Steuersignale für eine Abweichung in der zweiten Ebene (z.B. X, Y) beschränkt sind.

2. Abtastersteuersystem nach Anspruch 1, bei dem die Überwachungsmittel (DG, ADD, IND) eine Abweichungsberechnungsschaltung (DG) umfassen, die betreibbar ist, um die Abweichungssignale $\varepsilon_x$, $\varepsilon_y$, $\varepsilon_z$ in ein zusammengesetztes Abweichungssignal $\varepsilon$ entsprechend der Formel

$$\varepsilon = \sqrt{\varepsilon_x^2 + \varepsilon_y^2 + \varepsilon_z^2}$$

umzusetzen.

3. Abtastersteuersystem nach Anspruch 2, bei dem die Berechnungsmittel eine Senkrechtrichtungsgeschwindigkeits - Arithmetikschaltung (ARN) und eine Tangentialrichtungsgeschwindigkeits - Arithmetikschaltung (ART) umfassen, die jeweils so geschaltet sind, daß sie das zusammengesetzte Abweichungssignal $\varepsilon$ aus der Abweichungsberechnungsschaltung (DG) empfangen, und betreibbar sind, um ein Senkrechtrichtungsgeschwindigkeitssignal ($V_N$) bzw. ein Tangentialrichtungsgeschwindigkeitssignal ($V_T$) zu erzeugen.

4. Abtastersteuersystem nach Anspruch 3, bei dem die Tangentialrichtungsgeschwindigkeits - Arithmetikschaltung (ART) außerdem so geschaltet ist, daß sie das Abtastvorschubbewegungsrichtungssignal (VTD) aus der Sequenzsteuereinrichtung (SC) empfängt, und betreibbar ist, um die Polarität des Tangentialrichtungsgeschwindigkeitssignals ($V_T$) entsprechend zu bestimmen.

5. Abtastersteuersystem nach einem der vorhergehenden Ansprüche, bei dem die Phasenentscheidungsschaltung (PD) eine Schalteinrichtung (CC) zum Auswählen eines der Abweichungssignale $\varepsilon_x$ u. $\varepsilon_y$ und eine Nulldurchgangsschaltung (ZC) zum Aufnehmen des ausgewählten der Abweichungssignale $\varepsilon_x$ u. $\varepsilon_y$ zum Erzeugen des die Polarität dieses Abweichungssignals anzeigenden Phasenentscheidungssignals (PH) umfaßt.

**Revendications**

1. Un système de commande de copiage pour un appareil d'usinage du type dans lequel un palpeur (TR) balaie la surface d'un modèle (MDL) et un outil (CT) suit le mouvement du palpeur (TR) de façon à usiner une pièce (W) pour lui donner la forme du modèle (MDL), dans lequel le palpeur (TR) est capable de balayer la surface du modèle (MDL) pour le copiage dans un premier plan (par exemple Y, Z), d'effectuer une avance de décalage dans un second plan (par exemple X, Y) lorsqu'une frontière d'une région de copiage est atteinte, et de reprendre le copiage après l'achèvement de l'avance de décalage; et il est capable de produire des signaux de déplacement $\varepsilon_x$, $\varepsilon_y$ et $\varepsilon_z$ qui représentent des déplacements du palpeur le long d'axes X, Y et Z d'un système de coordonnées cartésiennes; le système de commande de copiage comprenant:

des moyens de contrôle (DG, ADD, IND), conçus pour déterminer la direction et la vitesse de copiage sur la base des signaux de déplacement $\varepsilon_x$, $\varepsilon_y$, $\varepsilon_z$, et à comparer ces signaux de déplacement avec une valeur de déplacement prédéterminée $\varepsilon_o$, pour produire une valeur d'erreur $\Delta\varepsilon$;

des moyens de calcul (ARN, ART) qui sont conçus pour calculer des signaux de commande ($V_N$, $V_T$) pour le palpeur, sur la base, au moins, de la valeur d'erreur $\Delta\varepsilon$;

une unité d'entrée (IU) pour l'entrée de données concernant une direction d'avance de décalage désirée; et

des moyens (SC) destinés à produire un signal de direction d'avance (VTD), pour l'application aux moyens de calcul, sur la base, au moins, des données d'entrée; caractérisé par:

un circuit de décision de phase (PD) capable de déterminer la polarité de l'un des signaux de déplacement (par exemple $\varepsilon_x$), dans la direction de l'un des axes (par exemple X); et par

un contrôleur de séquence (SC) capable de commander le copiage et l'avance de décalage sur la base d'une information de valeur d'avance de décalage et de position de retour de copiage provenant de l'unité d'entrée (IU), capable de remplir la fonction des moyens destinés à produire un signal de direction d'avance (VTD), et capable de produire ce signal sur la base du résultat de la décision qui est prise par le circuit de décision de phase (PD) et des données introduites concernant la direction d'avance de décalage, et capable en outre de commander les moyens de contrôle de manière à supprimer l'un des signaux de déplacement (par exemple $\varepsilon_z$) qui est extérieur au second plan (par exemple X, Y) pendant l'avance de décalage, grâce à quoi les signaux de commande qui sont appliqués au palpeur sont nécessairement restreints à des signaux de commande pour le déplacement dans le second plan (par exemple X, Y).

2. Un système de commande de copiage selon la revendication 1, dans lequel les moyens de contrôle (DG, ADD, IND) comprennent un circuit de calcul de déplacement (DG) qui est capable de convertir les signaux de déplacement $\varepsilon_x$, $\varepsilon_y$, $\varepsilon_z$ en un signal de déplacement composite $\varepsilon$, conformément à la formule:

$$\varepsilon = \sqrt{\varepsilon_x{}^2 + \varepsilon_y{}^2 + \varepsilon_z{}^2}$$

3. Un système de commande de copiage selon la revendication 2, dans lequel les moyens de calcul comprennent un circuit arithmétique de vitesse en direction normale (ARN) et un circuit arithmétique de vitesse en direction tangentielle (ART), chacun de ces circuits étant connecté de façon à recevoir le signal de déplacement composite $\varepsilon$ provenant du circuit de calcul de déplacement (DG), et étant capable de produire respectivement un signal de vitesse en direction normale ($V_N$) et un signal de vitesse en direction tangentielle ($V_T$).

4. Un système de commande de copiage selon la revendication 3, dans lequel le circuit arithmétique de vitesse en direction tangentielle (ART) est également connecté de façon à recevoir le signal de direction d'avance (VTD) à partir du contrôleur de séquence (SC), et il est capable de déterminer de façon correspondante la polarité du signal de vitesse en direction tangentielle ($V_T$).

5. Un système de commande de copiage selon l'une quelconque des revendications précédentes, caractérisé en ce que le circuit de décision de phase (PD) comprend un circuit de commutation (CC), pour sélectionner l'un des signaux de déplacement $\varepsilon_x$ et $\varepsilon_y$, et un circuit de passage par zéro (ZC) qui est destiné à recevoir le signal sélectionné parmi les signaux de déplacement $\varepsilon_x$ ou $\varepsilon_y$, et à produire le signal de décision de phase (PH) qui indique la polarité de ce signal de déplacement.

FIG. 1

MDL 1

FIG. 2

MDL 2

FIG. 3

# FIG. 4

(A)

(B)